# EUROPEAN PATENT APPLICATION

(11) **EP 1 840 390 A2**
(43) Date of publication of application: **03.10.2007**
(21) Application number: 07251299.9
(22) Date of filing: 27.03.2007
(51) Int. Cl.: F16B 25/10, F16B 35/04

(54) **Tapping screw**

(30) Priority: 27.03.2006 US 389846
(71) Applicant: Simpson Strong-Tie Co., Inc., Dublin, California 94568 (US)
(72) Inventor: Hale, Troy, Hendersonville Tennessee 37075 (US)
(74) Representative: Tothill, John Paul

(57) **Abstract**

A tapping screw (100) is disclosed for use in composite wood material. The tapping screw (100) includes wings (116) extending radially outward from the screw shank (102). As the winged screw is driven down into a composite wood material, the wings (116) shear off the composite material and granulate the composite material with which the wings (116) come into contact. As the granulated material moves upward along the shank (102), when the screw head (106) enters the composite material, the granulated material at the top of the screw bore is forced out of the screw bore and is removed The counterbore created by the wings (116) prevents the formation of an annular ring at the surface and allows the screw head (106) to be countersunk into the composite material.

## Description

The present invention relates to a screw for use in composite wood, and in particular a screw including axial wings for granulating the composite wood as the screw is driven into the material.
A deck adds beauty, utility and value to a home or business. Traditionally, woods such as pressure-treated yellow pine have been used for the structure of the deck for their low cost and high resistance to insect and moisture damage. However, yellow pine decks tend to check, split, warp and/or splinter after prolonged exposure to the elements. Additionally, the chemical insecticide-preservative may present health issues. It is also known to form decks from redwood, cedar and tropical hardwood. While these woods are better able to resist the elements, they are a more costly alternative and require proper maintenance and care to maintain their appearance.

In response to some of the deficiencies with pure wood decks, many homeowners and contractors are now specifying alternative materials for decking, including for example engineered vinyl systems and plastic-wood composites. Plastic-wood composites typically blend 30% to 50% recycled plastic with wood fibers. Composite woods are becoming more popular for use in decking and railings due to their low maintenance, resistance to moisture rot, insects and UV rays, and the fact that they do not splinter. A sample of a composite wood is disclosed in U.S. Patent No. 5,088,910 to Goforth, entitled, "System For Making Synthetic Wood Products From Recycled Materials."

Conventional tools and screw fasteners can be used to secure composite wood, for example, to underlying joists in a decking application. However, one problem with the use of conventional screws with composite woods is an event referred to as "flagging." When a conventional wood screw is driven into composite wood, the composite wood gets displaced radially outward from the screw. Thus, for example, when the head of the screw is driven into the composite material to form the counterbore, the composite material at the surface is forced upward, out of the screw hole. The result is flagging, where the upper surface of the composite material is deformed with a raised annular ring about the screw head. This raised annular ring presents an undesirable appearance.

One solution to the problem of flagging is proposed in U.S. Patent No. 6,616,391 to Druschel, entitled, "Screw For Plastic Composite Lumber." That reference discloses a screw having a bore consisting of radially projecting helical flutes wrapped around the screw shank. The helical flutes have an opposed helical orientation to the screw threads. This opposed relationship causes the flutes to push displaced plastic lumber material down along the shank, away from the screw head. Thus, the flutes bore a space beneath the screw head.

Another problem with driving conventional screws into composite materials is that the material is relatively dense, especially where the material has been displaced radially outward by the screw. The result is that it is difficult to create a counterbore where the head is countersunk to be at least flush with the surface. Often, the screw threads strip before the screw head is pulled into the material.

The present invention, roughly described, relates to a tapping screw for use in composite wood material.

According to a first aspect of the present invention there is provided a screw as claimed in claim 1.

According to a second aspect of the present invention there is provided a screw as claimed in claim 18.

According to a third aspect of the present invention there is provided a method as claimed in claim 26.

The tapping screw includes wings extending radially outward from the screw shank. In embodiments, there may be a pair of wings spaced 180° from each other. The wings may extend from the shank to a diameter just less than the diameter of the screw head. The wings may be positioned at various locations along the shank, for example just above the screw threads or just below the screw head.

As the winged screw is driven down into a composite wood material, the wings shear off the composite material and granulate the composite material with which the wings come into contact to form a counterbore capable of receiving the screw head. As the granulated material moves upward along the shank, when the screw head enters the composite material, the granulated material at the top of the screw bore is forced out of the screw bore and is removed. The counterbore created by the wings prevents the formation of an annular ring at the surface and allows the screw head to be countersunk into the composite material. Granulated material which is not removed from the counterbore formed by the wings may be pulled down into the screw hole by means of annular rings formed around the diameter of the screw.

Preferred embodiments of the present invention will now be described, by way of example only, and with reference to the accompanying drawings, in which:
FIGURE 1 is a perspective view of a tapping screw according to embodiments of the present invention.
FIGURE 2 is a side view of a tapping screw according to embodiments of the present invention.
FIGURE 3 is a cross-sectional side view of a tapping screw according to embodiments of the present invention.
FIGURE 4 is a cross-sectional end view of a tapping screw according to embodiments of the present invention.
FIGURE 5 is a cross-sectional view of a tapping screw according to an alternative embodiment of the present invention.
FIGURE 6 is a side view of a tapping screw according to a further alternative embodiment of the present invention.
FIGURES 7 through 10 are cross-sectional views of a screw including wings according to various alternative embodiments of the present invention.
FIGURE 11 is a side view of a tapping screw according to a further alternative embodiment of the present invention.
FIGURE 12 is a side view of a tapping screw according to an embodiment of the present invention embedded within a composite wood material.

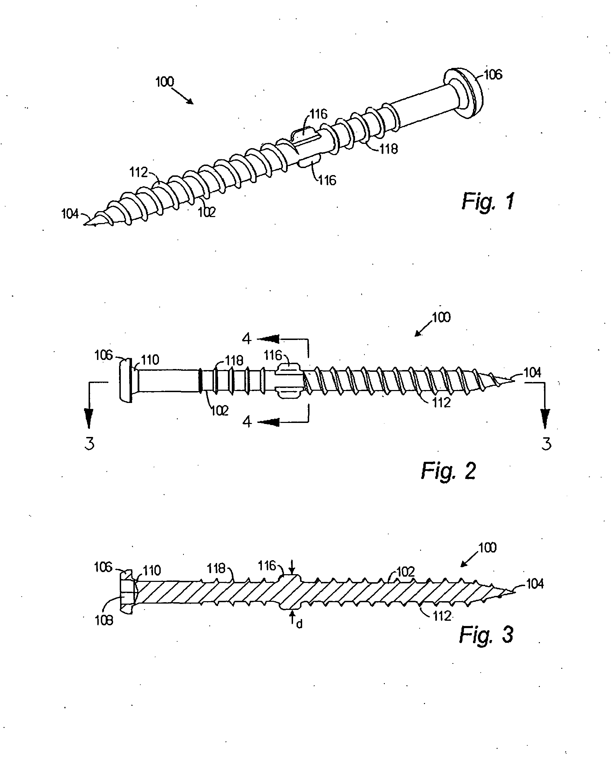

The present invention will now be described with reference to Figs. 1 through 12 which embodiments relate to a tapping screw including wings for granulating the composite wood material adjacent to the screw shank as the screw is driven into the composite wood material. The present invention may; however, be embodied in many different forms and should not be construed as being limited to the embodiments set forth herein; rather these embodiments are provided so that this disclosure will be thorough and complete and will fully convey the invention to those skilled in the art. Indeed, the invention is intended to cover alternatives, modifications and equivalents of these embodiments, which will be included within the scope of the invention as defined by the appended claims. Furthermore, in the following detailed description of the present invention, numerous specific details are set forth in order to provide a thorough understanding of the present invention. However, it will be clear to those of ordinary skill in the art that the present invention may be practiced without such specific details. In other instances, well known methods, procedures and components have not been described in detail as not to unnecessarily obscure aspects of the present invention.

Referring now to Figs. 1 through 4, there are shown a tapping screw 100 including a shank 102, a sharpened tip 104 and a head 106 opposite tip 104. Screw 100 may for example be formed of steel, such as C1018 or the like, and may have a length of 2.5 inches (6.35 cm). It is understood that the screw 100 may be longer or shorter than that in alternative embodiments.

Tip 104 may be sharpened to an angle between 20° and 30°, and more particularly about 26°, in embodiments of the invention. It is understood that tip 104 may be sharpened to angles smaller than 20° and larger than 30° in alternative embodiments. Head 106 includes a shaped recessed section 108 (Fig. 3) shaped to receive a screw driving instrument. The shape of recess 108 may vary in embodiments of the present invention. Head 106 may have a diameter of approximately 0.3 inches, and preferably includes a sharpened outer edge to facilitate the screw head's entry into the composite wood material. It is understood that the diameter of the head may be greater than or lesser than 0.3 inches (0.762 cm) in alternative embodiments of the present invention. A tapered annular collar 110 may be provided between head 106 and shank 102 in embodiments of the invention. Tapered collar 110 may be omitted in further embodiments.

The shank 102 may have a diameter of 0.133 inches (0.338 cm), though it may be larger or smaller than that in alternative embodiments. Shank 102 may further include four distinct sections. A first section adjacent to tip 104 may include threads 112 for pulling tapping screw 100 into a composite wood upon rotation of screw 100. Threads 112 may have a pitch of ten threads per inch (3.937 threads per centimeter), but it is understood that the threads may have a higher or smaller pitch than that in alternative embodiments. The outer diameter of threads 112 may be 0.19 inches (0.483 cm) in embodiments of the invention. It is understood that the outer diameter of the threads may vary from that in further embodiments of the invention.

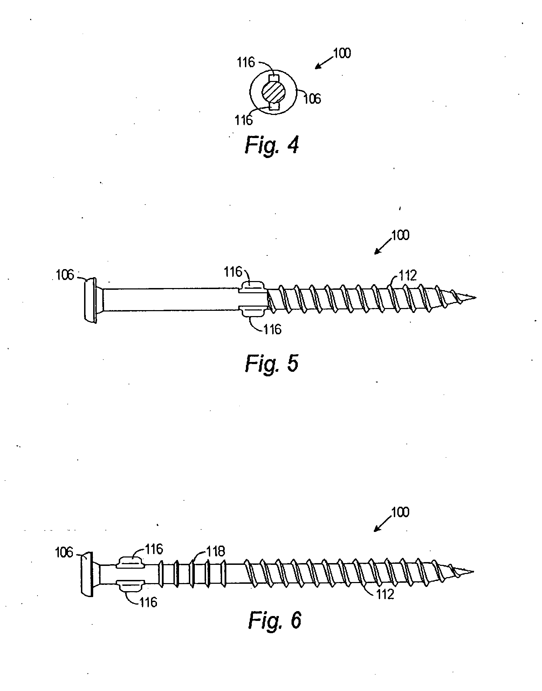

Shank 102 may include a second section having wings 116 for granulating the wood composite material as screw 100 is driven into the wood composite material as explained hereinafter. Shank 102 may further include a third section between threads 112 and the head 106 having annular rings 118, each ring 118 being oriented in a plane generally perpendicular to an axis of rotation of screw 100. In embodiments, shank 102 may include four annular rings 118 each including an outer diameter of 0.19 inches (0.483 cm) and each being spaced from each other approximately 0.1 inches (0.254 cm). It is understood that the outer diameter and spacing of annular rings 118 may vary in alternative embodiments of the present invention. In further embodiments of the present invention, such as for example shown in Fig. 5, annular rings 118 may be omitted. In a further alternative embodiment, the annular rings may be replaced by threads.

Shank 102 may further include a blank section 120 between collar 110 and the annular rings 118. Blank section 120 is devoid of threads and rings, and may have a diameter of approximately 0.147 inches (0.373 cm). It is understood that blank section 120 may have a diameter larger or smaller than 0.147 inches (0.373 cm) in alternative embodiments of the present invention.

According to embodiments of the present invention, screw 100 may include a pair of diametrically opposed wings 116 formed along the length of shank 102. In embodiments, wings 116 may be located between threads 112 and annular rings 118. However, it is understood that wings 116 may be located at a variety of positions along shank 102. For example, as shown in Fig. 6, wings 116 may be located directly beneath collar 110 in further embodiments of the present invention. As best seen in Fig. 3, wings 116 together have a diameter, d, of between approximately 0.23 inches (0.584 cm) and 0.24 inches (0.61 cm), and more particularly approximately 0.237 inches (0.602 cm), but it is understood that the diameter, d, of wings 116 may be other dimensions. In embodiments, the diameter of wings 116 may be greater than the outer diameter of threads 112 and less than or equal to the diameter of head portion 106.

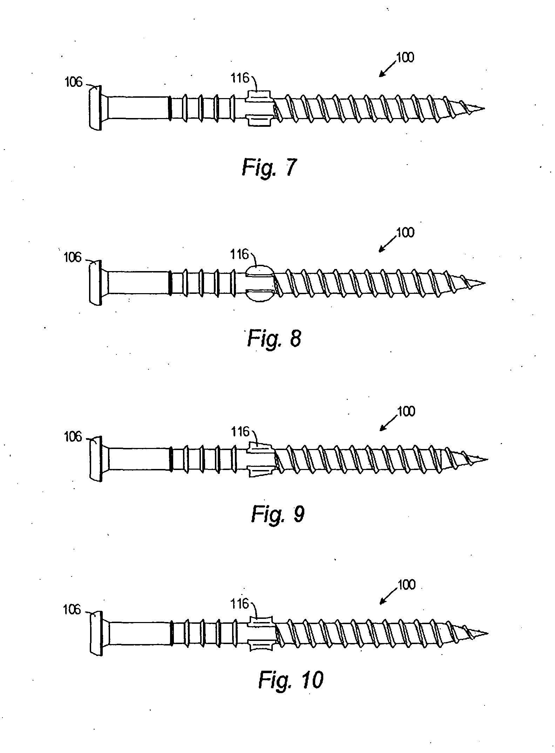

Wings 116 have a length, parallel to the axis of rotation, of 0.144 inches (0.366 cm), though the length may be greater or smaller than that in alternative embodiments of the present invention. As seen for example in Fig. 3, each wing 116 may have rounded edges. However, it is understood that wings 116 may have other configurations in alternative embodiments. For example, Fig. 7 illustrates an embodiment where wings 116 have square edges as opposed to the rounded edges shown in Fig. 3. Fig. 8 illustrates an embodiment where wings 116 have convex, rounded mid-portions, so that the diameter of the wings 116 at their mid-portion is greater than the diameter of wings 116 together at either end. Fig. 9 illustrates an embodiment where wings 116 include a tapered edge so the diameter of the wings 116 proximate end 104 is less than the diameter of wings 116 at a point distal from tip 104. Fig. 10 illustrates a further embodiment where wings 116 include a concave profile so that the diameter of the wings 116 at their midpoint is less than the diameter of the wings 116 at either end. Other configurations of wings 116 are contemplated.

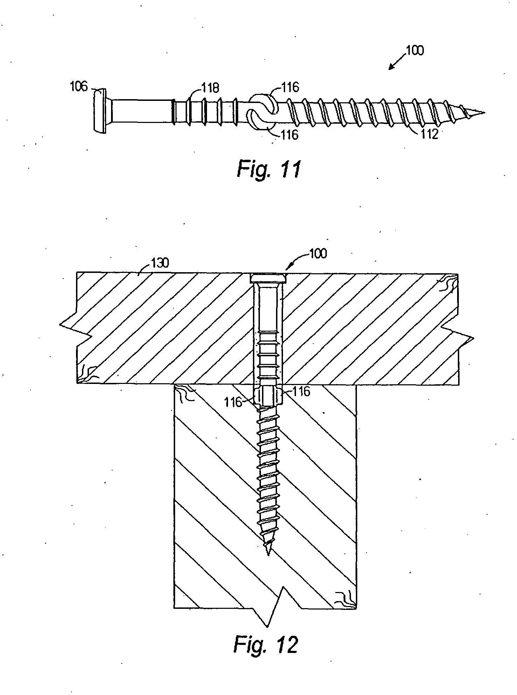

Wings 116 may be evenly spaced around the diameter of shank 102. Thus, in an embodiment including two wings, the wings 116 may be 180° apart from each other. It is understood that more than two wings may be provided around shank 102 in further embodiments of the present invention. In one embodiment each wing 116 may have a thickness of approximately 0.018 inches (0.046 cm). However, it is understood that the thickness of each of the wings 116 may be less than or greater than that in further embodiments of the present invention. In embodiments, wings 116 may be oriented parallel to the axis of rotation of tapping screw 100. However, as shown for example in Fig. 11, it is understood that wings 116 may curve slightly around shank 102. In such an embodiment, wings 116 would curve in the same direction around shank 102 as threads 112. In embodiments, each wing 116 may curve for example 45° along its length around shank 102. It is understood that each wing 116 may curve more or less than 45° in alternative embodiments.

The operation of wings 116 will now be explained with reference to Fig. 12. Fig. 12 illustrates a composite wood material 130 including a screw 100 driven therein. As indicated in the Background of the Invention section, as threads 112 auger into material 130, material adjacent to the threads is driven upward along shank 102 toward the surface of composite wood material 130. However, as screw 100 is driven down into composite wood material 130, wings 116 shear off the composite material 130 and granulate the material 130 within the diameter of the wings 116 to form a counterbore capable of receiving the screw head. As the granulated material 130 moves upward along the shank, when head 106 enters the material 130, the granulated material at the top of the screw bore is forced out of the screw bore and falls away. The counterbore created by the wings prevents the formation of an annular ring at the surface and allows the screw head to be countersunk into the composite material. Granulated material which is not removed from the counterbore formed by the wings 116 may be pulled down into the screw bore by means of annular rings 118 formed around the diameter of the screw.

In a further .embodiment of the present invention (not shown), the wings 116 may be formed on screw 100 with a predetermined yield strength such that, when wings 116 enter a predetermined distance into the composite material 130, the wings 116 shear off upon continued driving of the screw 100 into material 130. Upon being sheared off, no further granulation of the material 130 is provided by wings 116. Thus the depth to which wings 116 granulate the material 130 is predetermined and controlled.

The foregoing detailed description of the invention has been presented for purposes of illustration and description. It is not intended to be exhaustive or to limit the invention to the precise form disclosed. Many modifications and variations are possible in light of the above teaching. The described embodiments were chosen in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. A screw (100) for a composite wood material, the screw (100) having a first end and a second end, the screw comprising:
a head (106) at the first end;
a shank (102) between the first and second ends; and
a plurality of wings (116) between the first and second ends, the plurality of wings (116) extending radially out from the shank, the wings (116) capable of granulating composite wood material contacted by the wings (116) and capable of allowing at least a portion of the granulated composite wood material to be removed from a hole formed by the screw (100).

2. The screw (100) as recited in claim 1, wherein the plurality of wings (116) comprise two wings (116).

3. The screw (100) as recited in claim 2, wherein the two wings (116) are spaced 180° from each other.

4. The screw (100) as recited in any one of the preceding claims, wherein the plurality of wings (116) have a diameter less than or equal to a diameter of the head (106).

5. The screw (100) as recited in claim 4, the screw (100) further comprising threads (112), and wherein the plurality of wings (116) have a diameter greater than an outer diameter of the threads.

6. The screw (100) as recited in any one of the preceding claims, wherein the plurality of wings have a diameter of between approximately 0.23 inches (0.584 cm) and 0.24 inches (0.61 cm).

7. The screw (100) as recited in any one of the preceding claims, further comprising a plurality of threads (112) proximate the second end, and a plurality of annular rings (118) proximate the first end.

8. The screw (100) as recited in claim 7, wherein the plurality of wings (116) are positioned along the shank (102) between the plurality of threads (112) and plurality of annular rings (118).

9. The screw (100) as recited in claim 7, wherein the plurality of wings (116) are positioned along the shank (102) between the plurality of annular rings (118) and the head (106).

10. The screw (100) as recited in any one of claims 5 to 9, wherein the plurality of wings (116) wrap at least partially around the shank (102) in a same direction as the plurality of threads (112).

11. The screw (100) as recited in any one of claims 1 to 9, wherein the plurality of wings (116) are oriented straight along the length of the shank (102) and do not wrap around the shank (102).

12. The screw (100) as recited in any one of the preceding claims, wherein a wing of the plurality of wings (116) includes first and second edges generally parallel to each other and a third edge extending between the first and second edges, the third edge being generally perpendicular to the first and second edges and parallel to an axis of rotation of the screw (100).

13. The screw (100) as recited in claim 12, wherein the first and second edges adjoin the third edge in a rounded corner.

14. The screw (100) as recited in claim 12, wherein the first and second edges adjoin the third edge at right angles.

15. The screw (100) as recited in any one of claims 1 to 11, wherein a wing of the plurality of wings (116) includes first and second edges generally parallel to each other and a third edge extending between the first and second edges, the third edge forming a generally oblique angle to the first and second edges and parallel to an axis of rotation of the screw (100).

16. The screw (100) as recited in any one of the preceding claims, wherein a wing of the plurality of wings (116) includes a generally concave shape.

17. The screw (100) as recited in any one of claims 1 to 15, wherein a wing of the plurality of wings (16) includes a generally convex shape.

18. A screw (100) for a composite wood material, the screw (100) having a first end and a second end, the screw comprising:
a head (106) at the first end;
a shank (102) between the first and second ends;
threads (112) along the shank (102) and proximate to the second end; and
a plurality of wings (116) extending radially out from the shank (102), axially along the shank (102) and positioned between the threads (112) and the head (106), the wings (116) capable of shearing composite wood material to be removed from a hole formed by the screw (100) as the screw (100) augers into the composite wood material.

19. The screw (100) as recited in claim 18, wherein the plurality of wings (118) have a diameter less than or equal to a diameter of the head (106).

20. The screw (100) as recited in claim 18 or 19, further comprising a plurality of annular rings (118) proximate the first end.

21. The screw (100) as recited in claim 20, wherein the plurality of wings (116) are positioned along the shank (102) between the plurality of threads (112) and plurality of annular rings (118).

22. The screw (100) as recited in claim 20, wherein the plurality of wings (116) are positioned along the shank (102) between the plurality of annular rings (118) and the head (106).

23. The screw (100) as recited in any one of claims 18 to 22, wherein a wing of the plurality of wings (116) includes first and second edges generally parallel to each other and a third edge extending between the first and second edges, the third edge being generally perpendicular to the first and second edges and parallel to an axis of rotation of the screw (100).

24. The screw (100) as recited in claim 23, wherein the first and second edges adjoin the third edge in a rounded corner.

25. The screw (100) as recited in any one of claims 18 to 22, wherein a wing of the plurality of wings (116) includes first and second edges generally parallel to each other and a third edge extending between the first and second edges, the third edge forming a generally oblique angle to the first and second edges and parallel to an axis of rotation of the screw (100).

26. A method of preventing a ring from forming around a screw (100) driven into composite wood material, comprising the steps of:
(a) driving the screw (100) into the composite wood material
(b) shearing off portions of the composite wood material surrounding the screw (100); and
(c) forcing the material sheared off in said step (b) out of the hole formed by the screw (100).

27. The method as recited in claim 26, wherein said step (b) comprising the step of shearing off portions of the composite wood material surrounding the screw (100) with a plurality of wings (116) extending radially outward from the screw (100).

28. The method as recited in claim 26 or 27, wherein said step (c) comprising the step of forcing the sheared off material out of the hole as a result of the upward force on the composite wood material exerted by threads (112) of the screw (100).
